# EUROPEAN PATENT APPLICATION

(11) **EP 4 718 785 A1**
(43) Date of publication of application: **01.04.2026**
(21) Application number: 24203390.0
(22) Date of filing: 27.09.2024
(51) Int. Cl.: H04L 12/40

(54) **TRANSMITTING ETHERNET FRAMES WITH PRIORITY**

(71) Applicant: NXP B.V., 5656 AG Eindhoven (NL)
(72) Inventor: EVERS, Rainer, 5656AG Eindhoven (NL); CHAN, Lu Lu, 5656AG Eindhoven (NL); PANNELL, Donald Robert, 5656AG Eindhoven (NL); VERMEULEN, Hubertus Gerardus Hendrikus, 5656AG Eindhoven (NL)
(74) Representative: Schmütz, Christian Klaus Johannes

(57) **Abstract**

The present disclosure relates to a module for a first Ethernet node of a group of Ethernet nodes, the module comprising a media access control, MAC, interface, a physical coding sublayer, PCS, interface, and a priority manager, PM, interface, wherein the module is configured to receive and/or transmit sequences of a cycle over the interfaces, wherein the cycle comprises a start sequence, a series of multiple priority sequences, an announcement sequence, and a data sequence, wherein the start sequence consists of a sequence of a predefined start symbol and a predefined advertisement symbol, wherein each priority sequence consists of a sequence of a predefined commit symbol and a dedicated priority symbol, which is assigned to the respective priority sequence and indicates a priority of an Ethernet frame ready to be sent by one of the group of Ethernet nodes, wherein the announcement sequence consists of a sequence of the start symbol, a predefined commit symbol and a winner node symbol indicating one of the Ethernet nodes being ready to send the Ethernet frame having the highest priority, and wherein the data sequence comprises the Ethernet frame having the highest priority. The present disclosure also relates to an Ethernet node including the module and a communication system including several Ethernet nodes.

## Description

### TECHNICAL FIELD

The present disclosure relates to a module for an Ethernet node of a communication system comprising further Ethernet nodes. The present disclosure also relates to the Ethernet node and the communication system. Further, the present disclosure relates to a method for the module.

### BACKGROUND

Modem automobiles include various electronic control units (ECUs) that implement, for example, engine control, power train control, airbag systems, antilock brake systems, cruise control, electric power steering, audio systems, window control systems, door control systems, mirror adjustment systems, and battery and recharging systems for hybrid/electric cars. The ECUs communicate with each other in an automobile via in-vehicle network (IVN) technologies such as Ethernet.

Ethernet is a well-known technology, and the Institute of Electrical and Electronic Engineers (IEEE) 802.3 Working Group is a collection of standards that define physical layer and data link layer media access control (MAC) for wired Ethernet. An emerging IEEE standard that may be particularly applicable to in-vehicle networks is IEEE Std 802.3cg-2019, which is a protocol for 10 Mb/s single twisted-pair Ethernet, also referred to as 10BASE-T1S, that enables multiple nodes to connect to the same twisted-pair wire, also referred to as a "shared media." The IEEE Std 802.3-2022 physical layer (PHY) utilizes CSMA/CD (Carrier Sense Multiple Access, Collision Detection) for media access control along with an optional PHY Level Collision Avoidance (PLCA) mechanism.

The 10 Mb/sec single-pair PHY project in IEEE defined a multi-drop mode of operation where multiple end-nodes or bridges are connected to a single twisted-pair wire network segment. In Ethernet terms, this network would be called a half-duplex network segment. The project did not define a new Ethernet MAC so the IEEE Std 802.3-2022 standard Clause 4 MAC is used in half-duplex mode (CSMA/CD). This however causes topics to be addressed with the target application of Automotive since the CSMA/CD MAC is not deterministic.

One option to the topic to be address caused by CSMA/CD in automotive applications is to add logic to the PHY to avoid collisions. This is called Physical Layer Collision Avoidance (PLCA). PLCA is a protocol located in a Reconciliation Sublayer that can be applied according to IEEE Std 802.3cg-2019 to provide deterministic performance in in-vehicle networks. Although PLCA adds deterministic performance in a 10BASE-T1S network, applications such as in-vehicle networks may present additional challenges.

The original proposed PLCA is fair in terms of equal framerate. Enhancements have been made to change this to equal data-rate fairness.

The present disclosure provides an enhancement to PLCA which more closely mimics the well understood behavior of a QoS Ethernet switch resulting in a lower latency for higher priority frames.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a module for a first Ethernet node of a group of Ethernet nodes is provided, the module comprising: a media access control, MAC, interface, a physical coding sublayer, PCS, interface, and a priority manager, PM, interface, wherein the module is configured to receive and/or transmit sequences of a cycle over the interfaces, wherein the cycle comprises a start sequence, a series of multiple priority sequences, an announcement sequence, and a data sequence, wherein the start sequence consists of a sequence of a predefined start symbol and a predefined advertisement symbol, wherein each priority sequence consists of a sequence of a predefined commit symbol and a dedicated priority symbol, which is assigned to the respective priority sequence and indicates a priority of an Ethernet frame ready to be sent by one of the group of Ethernet nodes, wherein the announcement sequence consists of a sequence of the start symbol, a predefined commit symbol and a winner node symbol indicating one of the Ethernet nodes being ready to send the Ethernet frame having the highest priority, and wherein the data sequence comprises the Ethernet frame having the highest priority.

In one or more embodiments, the module is configured to create the start sequence; wherein the module is configured to receive first priority message, in particular a first priority symbol, via the PM interface, wherein the first priority message, in particular the first priority symbol, indicating a first priority of an Ethernet frame ready to be sent by the first Ethernet node; wherein the module is configured to create a first priority sequence and to transmit the first priority sequence via the PCS interface, wherein the first priority sequence including the first priority symbol; wherein the module is configured to receive the winner node symbol via the PM interface, create the announcement sequence and transmit the announcement sequence via the PCS interface.

In one or more embodiments, wherein the module is configured to receive a second priority sequence comprising a second priority symbol via the PCS interface, wherein the second priority symbol indicating a second priority of an Ethernet frame ready to be sent by a second Ethernet node of the group of Ethernet nodes; and wherein the module is configured to transmit the second priority symbol or a priority message, which represents the second priority, via the PM interface.

In one or more embodiments, the module is configured based on the received winner node symbol to either receive the Ethernet frame via the MAC interface, create the data sequence and transmit the data sequence via the PCS interface, or receive the data sequence via the PCS interface and to transmit the Ethernet frame of the received data sequence via the MAC interface.

In one or more embodiments, the module is configured to receive the start sequence via the PCS interface, wherein the module is configured to receive a second priority message, in particular a second priority symbol, via the PM interface, wherein the second priority message, in particular the second priority symbol, indicating a second priority of an Ethernet frame ready to be sent by a second Ethernet node of the group of Ethernet nodes, wherein the module is configured to create a second priority sequence including the second priority symbol and to transmit the second priority sequence via the PCS interface, wherein the module is configured to receive the ethernet frame of the second Ethernet node via the MAC interface, wherein the module is configured to receive the announcement sequence via the PCS interface, wherein the module is configured, if the winner node symbol indicating the second Ethernet node, to create the data sequence such that the data sequence comprises the Ethernet frame of the second Ethernet node and to transmit the created data sequence via the PCS interface.

In one or more embodiments, the cycle comprises the following series of sequences: the start sequence, the series of multiple priority sequences, the announcement sequence, and the data sequence.

In one or more embodiments, the module is configured to detect the start of a cycle by receiving a start sequence.

In one or more embodiments, the module is configured to detect a start of the announcement sequence by receiving a first subsequence of the start symbol and the commit symbol.

In one or more embodiments, the module is configured to detect a start of a priority sequence between the start sequence and the announcement sequence by the associated commit symbol.

In one or more embodiments, each priority sequence starts with the same commit symbol.

In one or more embodiments, each symbol consists of 4 bits, 5 bits, or 6 bits.

In accordance with a second aspect of the present disclosure, another Ethernet node is provided, the Ethernet nod comprising: a media access control, MAC, unit, a priority manager, PM, unit, a physical coding sublayer, PCS, unit, and a module according to the preceding claims, wherein the MAC interface of the module is coupled to the MAC unit, wherein the PM interface of the module is coupled to the PM unit, and wherein the PCS interface of the module is coupled to the PCS unit.

In one or more embodiments, the Ethernet node comprises a physical media attachment, PMA, unit and a physical medium dependent, PMD, unit.

In accordance with a third aspect of the present disclosure, a communication system is provided, the communication system comprising: an Ethernet node referred to as a coordinator Ethernet node according to the first aspect of the present disclosure, and a plurality of Ethernet nodes referred to as follower Ethernet nodes, each according to the second aspect of the present disclosure, wherein the coordinator Ethernet node and the follower Ethernet nodes are coupled via a shared media, wherein the PM unit of the coordinator Ethernet node is configured to determine a winner priority among the priorities of the ethernet frames, wherein the PM unit of the coordinator Ethernet node is configured to generate the winner node symbol or a priority message representing the ethernet node being ready to send the ethernet frame having the priority corresponding to the winner priority, wherein the PM unit of the coordinator node is configured to transmit the winner node symbol or a priority message via the PM interface to the module of the coordinator node, and wherein the module of the coordinator Ethernet node is configured to transmit the announcement sequence via the PCS interface of the module of the coordinator Ethernet node.

In accordance with a fourth aspect of the present disclosure, a method for a module for a first Ethernet node of a group of Ethernet nodes is provided, the module comprising a media access control, MAC, interface, a physical coding sublayer, PCS, interface, and a priority manager, PM, interface, wherein the method including the following steps: (a) Creating a start sequence of a cycle at the module, wherein the start sequence consists of the predefined start symbol and the subsequent, predefined advertisement symbol, and wherein the cycle comprises the start sequence, a series of multiple priority sequences, an announcement sequence, and a data sequence; (b) Transmitting the start sequence via the PCS interface of the module 100; (c) Receiving a priority message, in particular a priority sequence, indicating a priority of an Ethernet frame ready to be sent by a first Ethernet node; (d) Receiving multiple priority sequences via the PCS interface of the module, wherein each priority sequence consists of a sequence of a predefined commit symbol and a dedicated priority symbol, which is assigned to the respective priority sequence and indicates a priority of a further Ethernet frame ready to be sent by another Ethernet node; (e) Creating the announcement sequence consisting of a sequence of the start symbol, a predefined commit symbol and a winner symbol, which indicates one of the Ethernet nodes being ready to send the Ethernet frame having the highest priority; (f) Transmitting the announcement sequence via the PCS interface of the module; and (g) Receiving the data sequence comprising the Ethernet frame having the highest priority.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 schematically illustrates a simplified example of a communication system.
Figure 2 schematically illustrates a simplified example of a cycle.
Figures 3 to 6 schematically illustrate simplified examples of an Ethernet node.
Figure 7 schematically illustrate a simplified example of a flow chart of a method.

### DESCRIPTION OF EMBODIMENTS

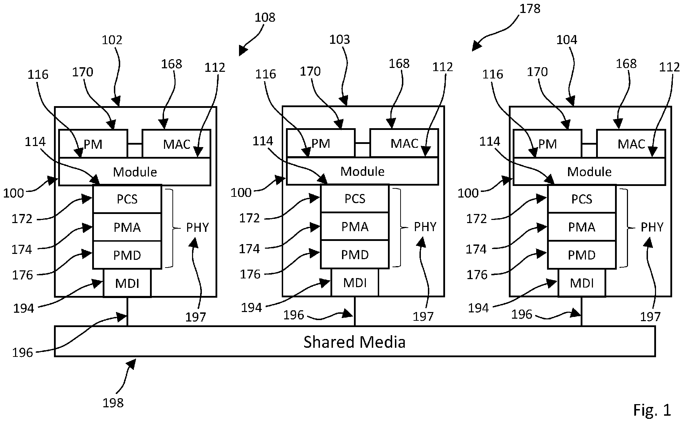

Figure 1 schematically illustrates an example of a communication system 178. The communication system 178 includes a plurality of Ethernet nodes 102, 103, 104. One of the Ethernet nodes 102 may be referred to as coordinator Ethernet node 102. The other Ethernet nodes 103, 104 may be referred to as subscriber Ethernet nodes 103, 104 or follower Ethernet nodes 103, 104. The communication system 178 further includes a shared media 198. The shared media 198 may be formed, for example, by a twisted pair of wires. Each of the Ethernet nodes 102, 103, 104 may be coupled to the shared media 198 so that the Ethernet nodes 102, 103, 104 may communicate with each other via the shared media 198.

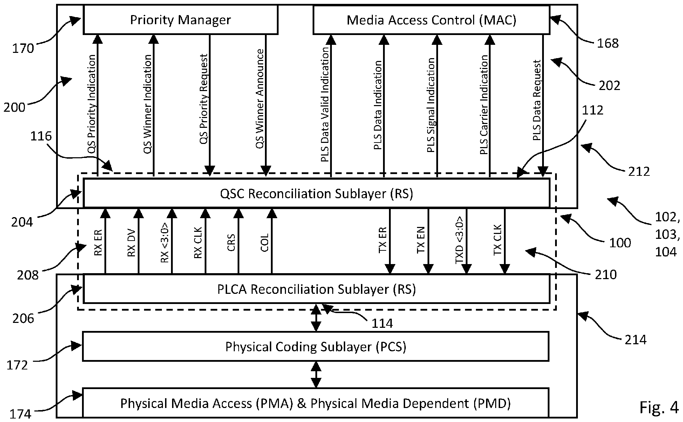

Each Ethernet node 102, 103, 104 may be configured as a device. In an example, an Ethernet node 102, 103, 104 may form part of a device of a vehicle. For example, an electronic control unit, an airbag unit, an anti-lock brake unit, a steering unit, or another unit of the vehicle may each include an Ethernet node 102, 103, 104. Each Ethernet node 102, 103, 104 may include a processing unit 212 and a circuit unit 214 (for example, see also Figure 4).

Although the Ethernet nodes 102, 103, 100 of Figure 1 each include a plurality of schematically illustrated units, such as the media access control, MAC, unit 168 and the physical coding sublayer, PCS, unit 172, it is noted that each Ethernet node 102, 103, 104 may include the illustrated units, fewer than the illustrated units, and/or additional other units.

In an example, the communication system 178 may be configured to utilize CSMA/CD for media access to the shared media 198. The communication system 178 and/or each Ethernet node 102, 103, 104 may be configured to be compatible with the IEEE Std 802.3cg-2019 protocol, which protocol may also be referred to as 10BASE-T1S protocol. In an example, each Ethernet node 102, 103, 104 may be configured to provide and/or perform a communication function via the shared media 198, in particular a physical layer communication via the shared media 198, according to the 10BASE-T1S protocol.

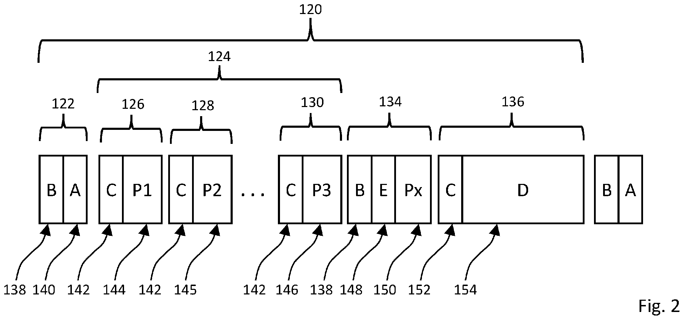

Each Ethernet node 102, 103, 104 may include a MAC unit 168. The MAC unit 168 may be configured to receive a data packet, in particular from a higher network layer. The MAC unit 168 may be configured to divide a received data packet into a plurality of frames. Such a frame may also be referred to as an Ethernet frame 154. Once the MAC unit 168 has received a data packet and has divided the data packet into the corresponding Ethernet frames 154 (for example, see also Figure 2), the Ethernet node 102, 103, 104 may have at least one Ethernet frame 154 ready to be sent via the shared media 198.

The MAC unit 186 may be configured to perform media access control for the respective associated Ethernet node 102. Each Ethernet node 102, 103, 104 may include a processing unit 212 (for example, see also Figure 4), such as a processor, in particular a microcontroller, a host processor, a host, a digital signal processor. The MAC unit 186 may be implemented by the processing unit 212 of the respective Ethernet node 102, 103, 104. Each MAC unit 168 may be configured in accordance with IEEE Std 802.3-2022.

Each Ethernet node 102, 103, 104 may include a respective PHY unit 197. In an example, the PHY unit 197 may be formed by a circuit unit 214 of the respective Ethernet node 102, 103, 104. Each PHY unit 197 may be configured to manage communication via the shared media 198, in particular according to IEEE Std 802.3cg-2019. Each PHY unit 197 may be configured to receive digital data, in particular bits of an Ethernet frame 154, and generate an analog signal at an interface 194, which may also be referred to as a media dependent interface (MDI), representing the received digital data, in particular the bits of the Ethernet frame 154. Each PHY unit 197 may further be configured to receive an analog signal at the interface 194 representing digital data. Each PHY unit 197 may be configured to generate digital data, particularly in the form of Ethernet frames 154, based on the data received from an analog signal. Each PHY unit 197 may also be configured to protect the respective associated Ethernet node 102, 103, 104 from external electrical conditions, such as electrical surges, that may occur on the shared media.

In an example, each PHY unit 197 may include a unit in the physical coding sublayer, also referred to as PCS unit 172. In an example, the PCS unit 172 may be formed by the circuit unit 214 of the respective Ethernet node 102, 103, 104. The PCS unit 172 may be configured in accordance with IEEE Std 802.3cg-2019. In an example, each PHY unit 197 may include a physical medium attachment unit, also referred to as PMA unit 174. In an example, the PMA unit 174 may be formed by the circuit unit 214 of the respective Ethernet node 102, 103, 104. The PMA unit 174 may be configured in accordance with IEEE Std 802.3cg-2019. In an example, each PHY unit 197 may include a unit in the physical media dependent layer, also referred to as PMD unit 176. In an example, the PMD unit 176 may be formed by the circuit unit 214 of the respective Ethernet node 102, 103, 104. The PMD unit 176 may be configured according to OPEN Alliance 10BASE-T1S PMD Transceiver Interface v1.5.

Each PCS unit 172 may be configured to perform data scrambling and recoding, in particular 4B5B recoding. Each PCS unit 172 may include a PCS transmit unit and a PCS receive unit, and a collision detection unit. The PCS transmit unit may include a scrambler and a unit for 4bit-5bit encoding. Each PCS receive unit may include a descrambler and a unit for 4bit-5bit decoding. In the transmit direction, each PCS unit 172 may be configured to translate data words each comprising 4 bits into data words each comprising 5 bits. The 5-bit words can be transmitted to the PMA unit 174. In the reverse direction, i.e. receive direction, the PCS unit 172 can receive data words that are each 5 bits long. In the receive direction, the PCS unit 172 may be configured to translate a data word comprising 5 bits into a data word comprising 4 bits.

Each PMA unit 174 may be configured to receive, in the transmit direction, data from a PCS unit 172 and generate an analog output signal based on the received data that represents the data received by the PCS unit 172. The data received by the PCS unit may be represented by the analog output signal according to a predefined encoding, such as differential Manchester encoding. Each PMA unit 174 may further be configured to receive, in the receive direction, an analog signal representing data. The data received via the analog signal may be translated by the PMA unit 174 into words, each comprising 5 bits. The words may represent the data of the analog signal.

Each PMD unit 176 can adapt the analog signal in the transmit direction, in particular with respect to the length of pulses or the edge steepness of pulses. Each PMD unit 176 can sample the analog signal in the receive direction. Each PMD unit 176 may be coupled to the MDI interface 194 of the respective Ethernet node 102, 103, 104 and/or form the MDI interface 194.

In principle, a collision in the transmission of different Ethernet frames 154, in particular from different Ethernet nodes 102, 103, 104, via the shared media 198 should be avoided. Physical layer collision avoidance, also referred to as PLCA, may therefore be implemented by each Ethernet node 102, 103, 104 in accordance with IEEE Std 802.3cg-2019. According to the PLCA, each Ethernet node 102, 103, 104 can be assigned a unique, dedicated identifier. The transmission via the shared media 198 may be performed in cycles, wherein in each cycle each Ethernet node 102, 103, 104 is assigned a slot corresponding to the respective identifier. Each Ethernet node 102, 103, 104 is authorized to perform a transmission of data in the respective associated slot.

In an example, the MAC unit 168 of each Ethernet node 102, 103, 104 may be configured to support and/or have implemented a quality of service (QoS) queue in the transmission direction of the respective Ethernet node 102, 130, 104. In an example, the MAC unit 168 of each Ethernet node 102, 103, 104 may include multiple QoS queues, in particular four QoS queues. The QoS queues may be configured to queue Ethernet frames 154 to be transmitted by the corresponding Ethernet node 102, 103, 104, and each QoS queue may correspond to a different priority, such as high priority, medium priority, normal priority, and low priority. The priorities may be listed in descending priority order. The multiple QoS queues may allow the frame priority to be differentiated based on an assignment to one of the QoS queues. In an example, a frame selector may be implemented in the MAC unit 168. In an example, the frame selector may be configured to implement strict priority scheduling to select Ethernet frames 154 from the QoS queues of the respective Ethernet node 102, 130, 104. In an example, the strict priority scheduling may dictate that the highest priority QoS queue is always emptied first via the frame selector, and only if the highest priority QoS queue is empty is a next lower priority QoS queue serviced. The QoS queue with the next priority can be used until this QoS queue is emptied or until a queue with a higher priority receives an Ethernet frame 154. In deterministic systems, schedulers with strict priority can generally be used due to their simplicity. To prevent starvation of lower priority queues, the output of each QoS queue of each MAC unit 168 can be rate-limited to ensure that the respective QoS queues do not transmit more data than they should.

Some Ethernet frames 154 may require more bandwidth and/or deterministic worst-case limited latency to pass over the shared media 198. It may be desirable to achieve a strict priority mode of operation in an IEEE Std 802.3cg-2019 compliant communication system, including, for example, an IEEE Std 802.3cg-2019 compliant communication system utilizing PLCA.

One approach to a strict prioritization mode of operation according to the present disclosure is based on the idea that the PLCA cycle may be used to collect from each Ethernet node 102, 103, 104 the priority of the Ethernet frame 154 that is ready at the respective Ethernet node 102, 103, 104 to be the next Ethernet frame 154 to be transmitted via the shared media 198. In an example, each of the Ethernet nodes 102, 103, 104 may announce in the respective assigned slot of the PLCA cycle via the shared media 198 the priority of the Ethernet frame 154 to be transmitted by the respective Ethernet node 102, 103, 104 as the next Ethernet frame 154 via the shared media 198. At least one of the Ethernet nodes 102, 103, 104 may include a coordinator function in order to collect the priorities of the Ethernet frames 154 and/or to select the most important priority and/or the associated Ethernet node 102, 103, 104 based on the group of priorities. The Ethernet node 102, 103, 104 performing the coordinator function may be referred to as coordinator Ethernet node 102, 103, 104. The coordinator Ethernet node 102, 103, 104 may announce which Ethernet node 102, 103, 104 is ready to send the Ethernet frame 154 with the most important priority in a cycle, which in an example includes at least the principle of the PLCA cycle. The cycle may also be referred to as an arbitration and transmission cycle, in particular AT cycle 120.

Figure 2 schematically illustrates an example of the AT cycle 120. The Ethernet node 102, 103, 104 having the Ethernet frame 154 with the most important priority may perform the transmission of the Ethernet frame 154 with the most important priority via the shared media 198 following the announcement. Thereafter, the AT cycle 120 may be terminated. The AT cycle 120 may be executed repeatedly so that in each AT cycle 120, in particular using the associated PLCA cycle, it may be determined which Ethernet node 102, 103, 104 wishes to send the Ethernet frame 154 with the most important priority, so that the corresponding Ethernet node 102, 103, 104 is also announced in the respective AT cycle 120 and thereupon the corresponding Ethernet node 102, 103, 104 may perform the transmission of the respective Ethernet frame 154. As an effect, a priority mode of operation in the communication system 178 may be possible and/or supported.

In an example, an Ethernet node 102, 103, 104 may include a unit 170, which may also be referred to as a priority manager unit 170 and/or a PM unit 170. In an example, an Ethernet node 102, 103, 104 configured as a coordinator Ethernet node 102, 103, 104 may include PM unit 170. PM unit 170 may be implemented by a processing unit 212 of Ethernet node 102, 103, 104. In an example, the PM unit 170 may be configured to collect, in the AT cycle 120, the priorities of the Ethernet frames 154 that are ready for transmission in the Ethernet nodes 102, 103, 104. The PM unit 170 may further be configured to select the highest priority from the group of priorities as the winning priority. The highest priority may also be referred to as the most important priority.

Figure 1 schematically illustrates an example of a module 100. The module 100 may be part of an Ethernet node 102, 103, 104. The module 100 may be fully implemented in the processing unit 212 of the Ethernet node 102, 103, 104. In an example, the module 100 may be configured to determine the identifier of the Ethernet node 102, 103, 104 that is ready to transmit the Ethernet frame 154 with the winning priority.

The module 100 includes a MAC interface 112. In an example, the MAC interface 112 is implemented by the processing unit 212 of the Ethernet node 102, 103, 104. The MAC interface 112 may be configured to be coupled to the MAC unit 168. As an effect, the module 100 may be coupled to the MAC unit 168 via the MAC interface 112 to enable communication between the module 100 and the MAC unit 168.

The module 100 includes a PCS interface 114. In an example, the PCS interface 114 may be implemented by the processing unit 212 of the Ethernet node 102, 103, 104. The PCS interface 114 may be configured to be coupled to the PCS unit 172. As an effect, the module 100 may be coupled to the PCS unit 172 via the PCS interface 114 to enable communication between the module 100 and the PCS unit 172.

The module 100 includes a PM interface 116. In an example, the PM interface 116 is implemented by the processing unit 212 of the Ethernet node 102, 103, 104. The PM interface 116 may be configured to be coupled to the PM unit 170. As an effect, the module 100 may be coupled to the PM unit 170 via the PM interface 116 to enable communication between the module 100 and the PM unit 170.

The module 100 may be configured for exchanging sequences 122, 126, 128, 130, 134, 136 and/or portions of the sequences 122, 126, 128, 130, 134, 136 between the MAC unit 168, the PM unit 170, and the PCS unit 172. In an example, a sequence may be understood to be a series of symbols and/or fields. A symbol may include at least 1 bit. If a symbol includes multiple bits, the symbol may be understood to be a series of bits. A field may also be understood as a series of bits. In a predefined sequence the number of bits and/or the order of the bits and/or the bit values of the respective bits of a field and/or a symbol may be predefined.

Figure 2 schematically illustrates an example of an AT cycle 120. The AT cycle 120 may be divided into several sequences 122, 126, 128, 130, 134, 136. The AT cycle 120 includes a start sequence 122, a series 124 of a plurality of priority sequences 126, 128, 130, an announcement sequence 134, and a data sequence 136.

In an example, the AT cycle 120 may be defined by the following sequence: the start sequence 122, the series 124 of a plurality of priority sequences 126, 128, 130, the announcement sequence 134, and the data sequence 136, particularly in the order mentioned. In the AT cycle 120, the sequences 122, 126, 128, 130, 134, 136 may directly follow each other. However, it is also possible that, for example, (small and/or predefined) pauses are provided between the sequences 122, 126, 128, 130, 134, 136. In an example, however, the AT cycle 120 includes no elements other than the sequences 122, 126, 128, 130, 134, 136.

In an example, each symbol 138 - 152 of a sequence 122, 126, 128, 130, 134, 136 may be understood as a single symbol or a plurality of symbols. In this sense, the commit symbol 142 may include, for example, a plurality of symbols, in particular identical symbols, or a single symbol. In an analogous manner, the understanding of the commit symbol 142 may apply to each symbol of the sequences 122, 126, 128, 130, 134, 136.

The start sequence 122 includes a predefined start symbol 138 and a predefined advertisement symbol 140. The advertisement symbol 140 follows the start symbol 138. Therefore, the start sequence 122 may include a sequence of the start symbol 138 and the advertisement symbol 140. In an example, the start symbol 138 in combination with the advertisement symbol 140 may represent the beginning of a (particularly new) AT cycle 120. In particular, the advertisement symbol 140 may further represent an announcement of a subsequent series 124 of multiple priority sequences 126, 128, 130.

The series 124 of multiple priority sequences 126, 128, 130 may be formed exclusively by the multiple priority sequences 126, 128, 130. The priority sequences 126, 128, 130 may directly follow one another. However, it is also possible that, for example, (small and/or predefined) pauses are provided between the priority sequences 126, 128, 130. In an example, however, the series 124 includes no elements other than the priority sequences 126, 128, 130. In an example, the series 124 may also be understood as a sequence.

Each priority sequence 126, 128, 130 includes a sequence of a predefined commit symbol 142 and a dedicated priority symbol 144, 145, 146. The priority symbol 144 of a single priority sequence 126 is solely assigned to and/or forms a part of said priority sequence 126. This type of assignment and/or type of component applies in an analogous manner to each individual priority sequence 126, 128, 130. Each individual priority sequence 126, 128, 130 may therefore include a dedicated priority symbol 144, 145, 146. Each priority symbol 144, 145, 146 may indicate a priority of an Ethernet frame 154 that is ready to be sent by an Ethernet node 102, 103, 104 of the group 108 of Ethernet nodes 102, 103, 104.

In an example, each individual priority sequence 126, 128, 130 may be associated with exactly one individual Ethernet node 102, 103, 104. For example, the first priority sequence 126 may be uniquely associated with the first Ethernet node 102. The second priority sequence 128 may, for example, be uniquely assigned to the second Ethernet node 103. Similarly, each further priority sequence 130 may be uniquely assigned to exactly one (further) Ethernet node 104. The number of priority sequences 126, 128, 130 may correspond to the number of Ethernet nodes 102, 103, 104 of the group 108 of Ethernet nodes 102, 103, 104.

In an example, each individual priority symbol 144, 145, 146 may be associated with exactly one individual Ethernet node 102, 103, 104. For example, the first priority symbol 144 of the first priority sequence 126 may be uniquely associated with the first Ethernet node 102. The second priority symbol 145 of the second priority sequence 128 may be uniquely associated with the second Ethernet node 103. Similarly, each further priority symbol 146 may be uniquely associated with exactly one (further) Ethernet node 104. The number of priority symbols 144, 145, 146 may correspond to the number of Ethernet nodes 102, 103, 104 of the group 108 of Ethernet nodes 102, 103, 104.

In an example, each individual priority symbol 144, 145, 146 may indicate a priority of an Ethernet frame 154 that is ready to be sent by the Ethernet node 102, 103, 104 associated with the respective priority symbol 144, 145, 146 and/or the respective priority sequence 126, 128, 130. In an example, the first priority symbol 144 may indicate a priority of a first Ethernet frame 154 that is ready to be sent by the first Ethernet node 102, wherein the first priority symbol 144 and/or the first priority sequence 126 is associated with the first Ethernet node 102 (or vice versa). In an example, the second priority symbol 145 may indicate a priority of a second Ethernet frame 154 that is ready to be sent by the second Ethernet node 103, wherein the second priority symbol 145 and/or the second priority sequence 128 is associated with the second Ethernet node 103 (or vice versa). Similarly, in an example, each further priority symbol 146 may indicate a priority of a further Ethernet frame 154 that is ready to be sent by a further Ethernet node 104, wherein the further priority symbol 146 and/or the further priority sequence 130 is associated with the further Ethernet node 104 (or vice versa).

It has previously been explained that each priority sequence 126, 128, 130 includes a sequence of a predefined commit symbol 142 and a dedicated priority symbol 144, 145, 146. The priority symbols 144, 145, 146 may differ from priority sequence 126, 128, 130 to priority sequence 126, 128, 130. Each priority sequence 126, 128, 130 includes the predefined commit symbol 142. In an example, the dedicated priority symbol 144, 145, 146 associated with the respective priority sequence 126, 128, 130 may follow the predefined commit symbol 142 in each priority sequence 126, 128, 130. The predefined commit symbol 142 of the multiple priority sequences 126, 128, 130 may be identical. In other words, the identical commit symbol 142 may be used for each priority sequence 126, 128, 130. As an effect, the commit symbol 142 may be used multiple times for each series 124 of the priority sequences 126, 128, 130.

The announcement sequence 134 may be defined by the following sequence: start symbol 138, commit symbol 148 and winner node symbol 150. The start symbol 138 of the announcement sequence 134 may be identical to the start symbol 138 of the start sequence 122. As an effect, the start symbol 138 may be used twice per AT cycle 120. As an example, the commit symbol 148 of the announcement sequence may be identical to the commit symbol 142 used in each priority sequence 126, 128, 130. As an effect, the predefined commit symbols 148, 142 may be used multiple times per AT cycle 120. In another example, the commit symbol 148 of the announcement sequence 134 may not be identical to the commit symbol 142 used in each priority sequence 126, 128, 130. As an effect, the commit symbol 148 of the announcement sequence 134 may be different from the other commit symbols 142 of the AT cycle 120. The sequence of the start symbol 138 of the announcement sequence 134 and the subsequent commit symbol 148 of the announcement sequence 134 may together represent an announcement for the subsequent winner node symbol 150. The winner node symbol 150 may indicate, from the group 108 of Ethernet nodes 102, 103, 104, the individual Ethernet node 102, 103, 104, such as the second Ethernet node 103, that is ready to send the Ethernet frame 154 that has the highest priority. The highest priority may be the highest priority from the group of priorities represented by the priority symbols 144, 145, 146.

As an effect, the series 124 of priority sequences 126, 128, 130 may be used to share the priorities of the Ethernet frames 154 (which are ready to be sent) among the group 108 of Ethernet nodes 102, 103, 104. The announcement sequence 134 may be used to share among the Ethernet nodes 126, 128, 130, which single Ethernet node 126, 128, 130 of the group of Ethernet nodes 126, 128, 130 was identified and/or selected as the "winner Ethernet node" 126, 128, 130 being prepared to send the Ethernet frame 154 having the highest priority among the priorities of all Ethernet frames 154.

The data sequence 136 includes at least the previously mentioned Ethernet frame 154, which has the highest priority. The Ethernet frame 154 includes a series of fields, each comprising at least one bit or more bits. In an example, the Ethernet frame 154 is a frame according to the IEEE Std 802.3-2022 protocol.

The data sequence 136 may further include a commit symbol 142. In this case, the data sequence 136 may include the commit symbol 142 and the Ethernet frame 154. The Ethernet frame 154 may directly follow the commit symbol 142. However, it is also possible that there is a (small and/or predefined) pause between the commit symbol 152 and the subsequent Ethernet frame 154. In an example, the commit symbol 152 of the data sequence 136 may be identical to the commit symbol 142 used in each priority sequence 126, 128, 130. In another example, the commit symbol 152 of the data sequence 136 may not be identical to the commit symbol 142 used in each priority sequence 126, 128, 130. As an effect, in an example, the commit symbol 152 of the data sequence 136 may be different from the other commit symbols 142,148 of the AT cycle 120. The commit symbol 152 of the data sequence 136 may represent an announcement for the subsequent Ethernet frame 154.

Figure 1 schematically illustrates an example of the communication system 178 including a plurality of Ethernet nodes 102, 103, 104 and a shared media 198. Each Ethernet node 102, 103, 104 may be coupled to the shared media 198 via an associated connection 196. The first Ethernet node 102 may be referred to as coordinator Ethernet node 102. The other Ethernet nodes 103, 104 may each be referred to as follower Ethernet nodes 103, 104. In each of the Ethernet nodes 102, 103, 104, an Ethernet frame 154 may be ready for transmission. The Ethernet frame 154 available in the coordinator Ethernet node 102 may have a first priority. The Ethernet frame 154 available in the first follower Ethernet node 103 can have a second priority. The Ethernet frame 154 available in the second follower Ethernet node 104 can have a third priority. The first priority can be lower than the second priority. The third priority may be lower than the first priority. As an effect, the second priority may be the highest priority. In an example, the following order may exist, starting with the highest priority: second priority, first priority, third priority. In an example, it would be desirable that from the group of Ethernet frames 154 of the plurality of Ethernet nodes 102, 103, 104, the Ethernet frame 154 of the first follower Ethernet node 103 is the first to be transmitted via the shared media 198, as said Ethernet frame 154 has the highest priority.

An AT cycle 120 provides the ability for each Ethernet node 102, 103, 104 to send an associated priority sequence 126, 128, 130 (each represented by a signal on the shared media 198), each priority sequence 126, 128, 130 comprising an associated priority symbol 144, 145, 146, each representing a priority of an Ethernet frame 154 available for sending in the respective Ethernet node 102, 103, 104. Exactly one of the priority sequences 126, 128, 130 can be assigned to each Ethernet node 102, 103, 104. If the AT cycle 120 is started by transmitting the start sequence 122 via the shared media 198, each Ethernet node 102, 103, 104 may determine the period for transmitting the respective assigned priority sequence 126, 128, 130 based on the start sequence 122. In addition, each Ethernet node 102, 103, 104 may be configured to transmit the commit symbol 142 and the respective period associated with the priority symbol 144, 145, 146 via the shared media 198 in the respective associated priority sequence 126, 128, 130, which represents the priority of the Ethernet frame 154 available for transmission in the respective Ethernet node 102, 103, 104.

In an example, it may be desirable for multiple Ethernet frames 154 to be transmitted between the Ethernet nodes 102, 103, 104. The Ethernet frames 154 may not be transmitted simultaneously via the shared media 198. Each of the Ethernet frames 154 may be assigned a dedicated priority that differs from Ethernet frame 154 to Ethernet frame 154. In an example, it may further be desirable for the Ethernet frames 154 to be transmitted via the shared media 198 according to the order of their priorities. In an example, the module 100 is suitable to support and/or enable such transmission.

The module 100 is configured to receive one or more sequences 122, 126, 128, 130, 134, 136 of the AT cycle 120 via one or more interfaces 112, 114, 116 of the module 100. Further, the module 100 may be configured to transmit one or more symbols 138 - 152 of the at least one sequence 122, 126, 128, 130, 134, 136 received by the module 100 via one or more interfaces 116 of the module 100.

In an example, the Ethernet node 102 may be a coordinator Ethernet node 102. The module 100 may be configured for use by the coordinator Ethernet node 102. The module 100 may be configured to generate the start sequence 122. In an example, the predefined start symbol 138 and the predefined advertisement symbol 140 may be stored by the module 100. The module 100 may further be configured to transmit the start sequence 122 via the PCS interface 114. The module 100, in particular the module 100 of the coordinator Ethernet node 102, may be configured to detect the start of an AT cycle 120 by transmitting the start sequence 122. In an example, the module 100 may transmit the start sequence to the PCS unit 172 and/or to the PHY unit 197 via the PCS interface 114. The PHY unit 197, which may include the PCS unit 172, may be configured to generate a signal representing the start sequence 122, in particular the associated sequence of the start symbol 138 and the advertisement symbol 140, at the media-dependent interface 194. The media-dependent interface 194 of the coordinator Ethernet node 102 may be coupled to the shared media 198 via a signal connection 196. In an example, the shared media 198 may be formed by a twisted pair of wires. The signal can be transmitted to the media-dependent interfaces 194 of the follower Ethernet nodes 103, 104 via the shared media 198.

In an example, the module 100 of the coordinator Ethernet node 102 may be configured to transmit the start symbol 138 of the generated start sequence 122, the advertisement symbol 140 of the generated start sequence 122 or the generated start sequence 122 via the PM interface 116, in particular to the PM unit 170. Through the transmission, the PM unit 170 may receive information that a new AT cycle 120 is starting.

In an example, the Ethernet node 103 may be a follower Ethernet node 103. The PHY unit 197 of the follower Ethernet node 103 may be configured to receive a signal via the media-dependent interface 194 from the shared media 198, wherein the signal represents a (or the) start sequence 122. The PHY unit 197 of the follower Ethernet node 103 may be configured to transmit the start sequence 122 represented by the signal to the module 100 of the follower Ethernet node 103 via the PCS interface 114. The module 100 of the respective follower Ethernet node 103 may be configured to receive the start sequence 122 via its PCS interface 114. The module 100 may be configured to transmit, based on a start sequence 122 received via the PCS interface 114, the start symbol 138 of the start sequence 122, the advertisement symbol 140 of the start sequence 122 or the start sequence 122, via the PM interface 116, in particular to the PM unit 170. The preceding explanations may apply in an analogous manner to the second follower Ethernet node 104.

As an effect, the module 100 of a coordinator Ethernet node 102 may generate a start sequence 122, in particular the associated start symbol 138 and the associated advertisement symbol 140, and transmit it via the associated PCS interface 114. The module 100 of each follower Ethernet node 103, 104 can receive the start sequence 122 via its PCS interface 114. The module 100, in particular the module 100 of the coordinator Ethernet node 102, may be configured to detect the start of an AT cycle 120 by transmitting the start sequence 122. The module 100, in particular the module 100 of each follower Ethernet node 103, 104, may be configured to detect the start of the AT cycle 120 by receiving the start sequence 122. As an effect, each module 100 of the Ethernet nodes 102, 103, 104 is aware of the start of a new AT cycle 120 and/or enabled to detect the start of a new AT cycle 120. Furthermore, in an example, each module 100 may be configured to synchronize in time with the respective other modules 100 and/or synchronize in time to the new AT cycle 120 via the start sequence 122, in particular via the associated start symbol 138 and/or advertisement symbol 140.

The PM unit 170 of the coordinator Ethernet node 102 and the PM unit 170 of each follower Ethernet node 103, 104 can be informed of the start of an AT cycle 120 by transmitting a start symbol 138, an advertisement symbol 140 or a start sequence 122 to the respective PM units 170.

In the AT cycle 120, the start sequence 122 is followed by the series 124 of multiple priority sequences 126, 128, 130. The order of the priority sequences 126, 128, 130 may be predefined. Each priority sequence 126, 128, 130 may be assigned to exactly one Ethernet node 102, 103, 104. The priority sequence 126, 128, 130 to which the respective Ethernet node 102, 103, 104 may be stored in the module 100. For example, the module 100 of the coordinator Ethernet node 102 may store that the coordinator Ethernet node 102 is assigned to the first priority sequence 126. The module 100 of the first follower Ethernet node 103 may store, for example, that the first follower Ethernet node 103 is assigned to the second priority sequence 128. The module 100 of the second follower Ethernet node 104 may store, for example, that the second follower Ethernet node 104 is associated with the third priority sequence 130.

Each module 100 may be configured to transmit the priority sequence 126, 128, 130 associated with the respective Ethernet node 102, 103, 104 in a time slot corresponding to the order of the series 124 of priority symbols 126, 128, 130 via the PCS interface 114. As an effect, the priority sequences 126, 128, 130 may be transmitted in a predefined order via the shared media 198. In an example, the module 100 of the coordinator Ethernet node 102 may be configured to transmit the first priority sequence 126 via the associated PCS interface 114 subsequent to the start sequence 122. In an example, the module 100 of the first follower Ethernet node 103 may be configured to transmit the second priority sequence 128 subsequent to the first priority sequence 126 via the associated PCS interface 114. In an example, the module 100 of the second follower Ethernet node 104 may be configured to transmit the third priority sequence 130 subsequent to the second priority sequence 128 via the associated PCS interface 114.

Each MAC unit 168 of an Ethernet node 102, 103, 104 may be configured to transmit an Ethernet frame 154. In a rare case, each MAC unit 168 may be configured to detect, determine, and/or provide the priority of the respective Ethernet frame 154 available for transmission. Each PM unit 170 of an Ethernet node 102, 103, 104 may be coupled to the MAC unit 168 of the respective Ethernet node 102, 103, 104 to acquire the priority of the respective Ethernet frame 154 ready for transmission. Each PM unit 170 of an Ethernet node 102, 103, 104 may be configured to generate a dedicated priority message, in particular a dedicated priority symbol 144, 145, 146, indicating the priority of the Ethernet frame 154 that is ready for transmission in the respective Ethernet node 102, 103, 104, in particular in the MAC unit 168 of the respective Ethernet node 102, 103, 104. Each PM unit 170 may be configured to transmit the respective priority message to the module 100 of the Ethernet node 102, 103, 104 that also includes the respective PM unit 170. Each module 100 may be configured to receive a priority message via the associated PM interface 116. Each module 100 may have the predefined commit symbol 142 stored for a priority sequence 126, 128, 130. In an example, each module 100 of an Ethernet node 102, 103, 104 may be configured to generate a priority sequence 126, 128, 130 associated with the respective Ethernet node 102, 103, 104. In an example, each module 100 of an Ethernet node 102, 103, 104 may be configured to generate the priority sequence 126, 128, 130 associated with the respective Ethernet node 102, 103, 104 from the sequence of the predefined commit symbol 142 and the dedicated priority symbol 144, 145, 146 associated with the respective priority sequence 126, 128, 130 and indicating the priority of the Ethernet frame 154 that is ready to be sent by the respective Ethernet node 102, 103, 104, in particular by its MAC unit 168.

In an example, the PM unit 170 of an Ethernet node 102, 103, 104 may be coupled to the MAC unit 168 of the respective Ethernet node 102, 103, 104 such that the PM unit 170 may acquire from the MAC unit 168 the priority that an Ethernet frame 154 has that is ready to be sent in the MAC unit 168. If multiple Ethernet frames 154 are present in the MAC unit 168, one of the Ethernet frames 154 may be selected for sending by the MAC unit 168. The aforementioned priority may refer to the selected Ethernet frame 154. In an example, the PM unit 170 may be directly coupled to the MAC unit 168 to acquire said priority. In another example, the PM unit 170 may be coupled to the MAC unit 168 via the module 100 of the respective Ethernet node 102, 103, 104 to acquire said priority.

In an example, the module 100 of a coordinator Ethernet node 102 may be coupled to the PM unit 170 of the coordinator Ethernet node 102 via the PM interface 116 to acquire the priority of the Ethernet frame 154 that is ready to be sent in the MAC unit 168 of the coordinator Ethernet node 102. In an example, the module 100 of the coordinator Ethernet node 102 may be configured to receive, via the PM interface 116, a first priority message, in particular the first priority symbol 144, representing the priority of the Ethernet frame 154 that is ready to be sent in the MAC unit 168 of the coordinator Ethernet node 102. If the first priority message is not already formed by the first priority symbol 144, the module 100 of the coordinator Ethernet node 102 may be configured to generate the first priority symbol 144 based on the first priority message such that the first priority symbol 144 represents the priority of the Ethernet frame 154 that is ready to be sent in the MAC unit 168 of the coordinator Ethernet node 102.

In an example, the module 100 of the coordinator Ethernet node 102 may be configured to generate a first priority sequence 126 comprising the predefined commit symbol 142 and the first priority symbol 144. In an example, the module 100 of the coordinator Ethernet node 102 may be configured to transmit the first priority sequence 126 via its PCS interface 114. In an example, the module 100 of the coordinator Ethernet node 102 may be configured to transmit the first priority sequence 126 via the PCS interface 114 subsequent to the start sequence 122, thus directly after the start sequence was sent. As an effect, the module 100 of the coordinator Ethernet node 102 may transmit the start sequence 122 and the first priority sequence 126 sequentially via the PCS interface 114.

In an example, the PHY unit 197 of the coordinator Ethernet node 102 may be configured to generate a signal representing the first priority sequence 126 at the media dependent interface 194. The signal may be transmitted from the media-dependent interface 194 of the PHY unit 197 of the coordinator Ethernet node 102 to each follower Ethernet node 103, 104 via the shared media 198. The PHY unit 197 of each follower Ethernet node 103, 104 may include a media-dependent interface 194 through which the signal representing the first priority sequence 126 may be received. The PHY unit 197 of each follower Ethernet node 103, 104 may be configured to transmit the first priority sequence 126 represented by the signal to the respective associated module 100 via its PCS interface 114. As an effect, the first priority sequence 126 may be transmitted to each module 100 of the follower Ethernet nodes 103, 104. The module 100, in particular the module 100 of each follower Ethernet node 103, 104, may be configured to detect a start of a priority sequence 126, 128, 130 by the associated commit symbol 142. Each priority sequence 126, 128, 130 may begin with the identical commit symbol 142. Each module 100 may be configured to detect the commit symbol 142. In an example, the module 100 may be configured to detect the subsequent priority symbol 144, 145, 146 in response to detecting the commit symbol 142.

In an example, the module 100 of the first follower Ethernet node 103 may be coupled to the PM unit 170 of the first follower Ethernet node 103 via the PM interface 116 to acquire the priority of the Ethernet frame 154 that is ready to be sent in the MAC unit 168 of the first follower Ethernet node 103. In an example, the module 100 of the first follower Ethernet node 103 may be configured to receive, via the PM interface 116, a second priority message, in particular the second priority symbol 145, representing the priority of the Ethernet frame 154 that is ready to be sent by the MAC unit 168 of the first follower Ethernet node 103. If the second priority messages are not already formed by the second priority symbol 145, the module 100 of the first follower Ethernet node 103 may be configured, to generate the second priority symbol 145 based on the second priority message such that the second priority symbol 145 represents the priority of the Ethernet frame 154 that is ready to be send by the MAC unit 168 of the first follower Ethernet node 102.

The module 100 of the first follower Ethernet node 103 may be configured to generate the second priority sequence 128 comprising the predefined commit symbol 142 and the second priority symbol 145. In an example, the module 100 of the first follower Ethernet node 103 may be configured to transmit the second priority sequence 128 via the associated PCS interface 114. Previously, it was explained that the module 100 of the first follower Ethernet node 103 is configured to receive the first priority sequence 126 via the associated PCS interface 114. The module 100 of the first follower Ethernet node 103 may be configured to transmit the second priority sequence 128 via the PCS interface 114 subsequent to the (complete) receipt of the first priority sequence 126. As an effect, the first priority sequence 126 and the second priority sequence 128 are transmitted in successive periods (via corresponding signals) via the shared media 198.

In an example, the PHY unit 197 of the first follower Ethernet node 103 may be configured to generate a signal representing the second priority sequence 128 at the media-dependent interface 194. The signal may be transmitted from the media-dependent interface 194 of the PHY unit 197 of the first follower Ethernet node 103 to each of the other nodes 102, 104, in particular the coordinator Ethernet node 102 and the second follower Ethernet node 104, via the shared media 198. The PHY unit 197 of the coordinator Ethernet node 102 may receive the signal via the associated media-dependent interface 194, wherein the received signal represents the second priority sequence 128. The PHY unit 197 of the coordinator Ethernet node 102 may be configured to transmit the second priority sequence 128 represented by the signal to the associated module 100 via the PCS interface 114. As an effect, the second priority sequence 128 may be transmitted to the module 100 of the coordinator Ethernet node 102.

The module 100 may be configured to transmit via the associated PM interface 116 the priority symbol 145 of a priority sequence 128 received via the associated PCS interface 114. In an example, the module 100 of the coordinator Ethernet node 102 may be configured to transmit the second priority symbol 145 of the second priority sequence 128 received via the associated PCS interface 114 via the associated PM interface 116. In an example, the module 100 may be configured to transmit a priority message representing the priority represented by the priority symbol 145 via the PM interface 116 instead of the priority symbol 145. As an effect, the PM unit 170 of the coordinator Ethernet node 102 may have both the information about the first priority of the Ethernet frame 154 that is ready to be sent by the MAC unit 168 of the coordinator Ethernet node 102 and the information about the second priority of the (further) Ethernet frame 154 that is ready to be sent by the MAC unit of the first follower Ethernet node 103.

In an example, the PHY unit 197 of the second follower Ethernet node 104 may receive the signal of the first follower Ethernet node 103 via the media-dependent interface 194 of the second follower Ethernet node 104, wherein the received signal represents the second priority sequence 128. The PHY unit 197 of the second follower Ethernet node 104 may be configured to transmit the second priority sequence 128 represented by the signal to the associated module 100 via the PCS interface 114. As an effect, the second priority sequence 128 may be transmitted to the module 100 of the second follower Ethernet node 104.

In an example, the module 100 of the second follower Ethernet node 104 may be configured to transmit the second priority symbol 145 of the second priority sequence 128 via the associated PM interface 116. In an example, the module 100 may be configured to transmit a priority message representing the priority represented by the priority symbol 145 via the PM interface 116 instead of the priority symbol 145. As an effect, the PM unit 170 of the second Ethernet node 104 may have both the information about the first priority of the Ethernet frame 154 that is ready to be sent by the MAC unit 168 of the coordinator Ethernet node 102 and the information about the second priority of the (further) Ethernet frame 154 that is ready to be sent by the MAC unit of the first follower Ethernet node 103.

In an example, the module 100 of the second follower Ethernet node 102 may be coupled to the PM unit 170 of the second follower Ethernet node 104 via the PM interface 116 to acquire the priority of the Ethernet frame 154 that is ready to be sent in the MAC unit 168 of the second follower Ethernet node 104. In an example, the module 100 of the second follower Ethernet node 104 may be configured to receive, via the PM interface 116, a third priority message, in particular the third priority symbol 146, representing the priority of the Ethernet frame 154 that is ready to be sent in the MAC unit 168 of the second follower Ethernet node 103. If the third priority message is not already formed by the third priority symbol 146, the module 100 of the second follower Ethernet node 104 may be configured to generate the third priority symbol 146 based on the third priority message such that the third priority symbol 145 represents the priority of the Ethernet frame 154 that is ready to be sent in the MAC unit 168 of the second follower Ethernet node 103.

The module 100 of the second follower Ethernet node 104 may be configured to generate the third priority sequence 130 comprising the predefined commit symbol 142 and the third priority symbol 146. In an example, the module 100 of the second follower Ethernet node 104 may be configured to transmit the third priority sequence 130 via the associated PCS interface 114. Previously, it was explained that the module 100 of the second follower Ethernet node 104 is configured to receive the second priority sequence 126 via the associated PCS interface 114. The module 100 of the second follower Ethernet node 104 may be configured to transmit the third priority sequence 130 via the PCS interface 114 subsequent to the receipt of the second priority sequence 128. As an effect, the first priority sequence 126, the second priority sequence 128, and the third priority sequence are transmitted in sequentially timed periods (via corresponding signals) via the shared media 198.

In an example, the PHY unit 197 of the second follower Ethernet node 104 may be configured to generate a signal representing the third priority sequence 130 at the media-dependent interface 194. The signal may be transmitted from the media-dependent interface 194 of the PHY unit 197 of the second follower Ethernet node 104 via the shared media 198 to each of the other Ethernet nodes 102, 103, in particular the coordinator Ethernet node 102 and the first follower Ethernet node 103. The PHY unit 197 of the coordinator Ethernet node 102 may receive the signal via the associated media-dependent interface 194, wherein the received signal represents the third priority sequence 130. The PHY unit 197 of the coordinator Ethernet node 102 may be configured to transmit the third priority sequence 130 represented by the signal to the associated module 100 via the PCS interface 114. As an effect, the third priority sequence 130 may be transmitted to the module 100 of the coordinator Ethernet node 102.

The module 100 may be configured to transmit via the associated PM interface 116 the priority symbol 146 of a priority sequence 130 received via the associated PCS interface 114. In an example, the module 100 of the coordinator Ethernet node 102 may be configured to transmit the third priority symbol 146 of the third priority sequence 130 received via the associated PCS interface 114 via the associated PM interface 116. In an example, the module 100 may be configured to transmit a priority message representing the priority represented by the priority symbol 146 via the PM interface 116 instead of the priority symbol 146. As an effect, the PM unit 170 of the coordinator Ethernet node 102 may have the information about the first priority of the Ethernet frame 154 that is ready to be sent by the MAC unit 168 of the coordinator Ethernet node 102 and the information about the second priority of the (further) Ethernet frame 154 that is ready to be send by the MAC unit 168 of the first follower Ethernet node 103 and the information about the third priority of the (further) Ethernet frame 154 that is ready to be send by the MAC unit 168 of the second follower Ethernet node 104.

Where the communication system 178 includes further follower Ethernet nodes (not shown), the preceding explanations, preferred features, advantages and/or effects may apply in an analogous manner to each follower Ethernet node as explained in relation to the first and/or second follower Ethernet node (previously or hereinafter).

The PM unit 170 of the coordinator Ethernet node 102 may be configured to receive the priority symbols 145, 146 and/or the priority messages, in particular the first and/or second priority messages. As an effect, the PM unit 170 may access a group of priorities of the Ethernet frames 154, each of which is ready to be send by one of the MAC units 168 of the Ethernet nodes 102, 103, 104. The group of priorities includes, for example, the first priority, the second priority, and the third priority. In an example, the second priority may be the highest priority among the priorities in the group. The PM unit 170 of the coordinator Ethernet node 102 may be configured to identify the highest priority from the group of priorities as the winning priority.

The PM unit 170 of the coordinator Ethernet node 102 may have a respective associated dedicated identifier stored for each of the Ethernet nodes 102, 103, 104. Each identifier may uniquely identify one of the Ethernet nodes 102, 103, 104. In an example, a first identifier may identify the coordinator Ethernet node 102, a second identifier may identify the first follower Ethernet node 103, and a third identifier may identify the second follower Ethernet node 104.

In an example, the PM unit 170 may be configured to select the identifier of the individual Ethernet node 102, 103, 104 as the winner identifier whose MAC unit 168 is ready to send the Ethernet frame 154 having the winning priority. In an example, if the second priority of the Ethernet frame 154 is the highest that is ready to be sent in the MAC unit 168 of the first follower Ethernet node 103, then the PM unit 170 may select the second identifier of the first follower Ethernet node 103 as the winner identifier.

The PM unit 170 of the coordinator Ethernet node 102 may be configured to generate a winner message, wherein the winner message represents the winner identifier. The PM unit 170 of the coordinator Ethernet node 102 may be configured to transmit the winner message to the module 100 of the coordinator Ethernet node 102 via the PM interface 116. The module 100 of the coordinator Ethernet node 102 may be configured to receive the winner message via the PM interface 116.

In an example, the module 100 is configured, in response to receiving the winner message via the PM interface 116, to generate the announcement message 134 based on the winner message. In an example, the module 100 may be configured to have the start symbol 138 and/or the commit symbol 148 stored. In an example, the module 100 may be configured to generate the winner node symbol 150 based on the winning message such that the winner node symbol 150 indicates the Ethernet node 103 that is ready to send the highest priority Ethernet frame 154. In an example, the module 100 may be configured to generate the winner node symbol 150 based on the winning message such that the winner node symbol 150 represents the winner identifier. The winner identifier may uniquely indicate the Ethernet node 102, 103, 104, in particular the winning Ethernet node 103, that is ready to send the Ethernet frame 154 having the highest priority, in particular the winning priority.

In an example, the module 100 of the coordinator Ethernet node 102 is configured to receive the winner message via the PM interface 116 from the PM unit 170 of the coordinator Ethernet node 102. In an example, the winner message may represent the second identifier of the first follower Ethernet node 103 as the winner identifier. The module 100 of the coordinator Ethernet node 102 may be configured to generate the announcement sequence 134 in response to receiving the winning message, such that the announcement sequence 134 includes the sequence of the start symbol 138, the commit symbol 148, and the winner node symbol 150, wherein the winner node symbol 150 represents the second identifier of the first follower Ethernet node 103 as the winner identifier.

In an example, the module 100 may be configured to transmit the announcement sequence 134 via the PCS interface 114. For example, the module 100 may transmit the announcement sequence 134 via the PCS interface 114 subsequent to receiving the last priority sequence 130 in the series 124 of priority sequences 126, 128, 130. In an example, the module 100 of the coordinator Ethernet node 102 may be configured to transmit the announcement sequence 134 via the PCS interface 114 subsequent to the receipt of the third priority sequence 130.

The PCS unit 172 and/or the PHY unit 197 of the coordinator Ethernet node 102 may be configured to receive the announcement sequence 134. The PHY unit 197 of the coordinator Ethernet node 102 may be configured to generate a signal representing the announcement sequence 134 at the media-dependent interface 194. The signal may be transmitted from the coordinator Ethernet node 102 to each follower Ethernet node 103, 104 via the shared media 198.

Each follower Ethernet node 103, 104 may include a PHY unit 197 configured to receive the signal representing the announcement sequence 134 via the associated media-dependent interface 194. Said PHY unit 197 may be configured to transmit the announcement sequence 134 to the PCS interface 114 of the module 100 of the respective follower Ethernet node 103, 104.

In an example, the PHY unit 197 of the first follower Ethernet node 103 may receive the signal representing the announcement sequence 134 via the associated media-dependent interface 194. In an example, the PHY unit 197 of the first follower Ethernet node 103 may further be configured to transmit the announcement sequence 134 to the PCS interface 114 of the module 100 of the first follower Ethernet node 103. In an example, the PHY unit 197 of the second follower Ethernet node 104 may receive the signal presenting the announcement sequence 134 via the associated media-dependent interface 194. In an example, the PHY unit 197 of the second follower Ethernet node 104 may be configured to transmit the announcement sequence 134 to the PCS interface 134 of the module 100 of the second follower Ethernet node 104. As an effect, the modules 100 of both follower Ethernet nodes 103, 104 may receive the same announcement sequence 134 comprising the winner node symbol 150. The winner node symbol 150 may represent the identifier of the Ethernet node 103 that is ready to send the Ethernet frame 154 that has the highest priority. In an example, the module 100 may be configured to recognize the announcement sequence 134 by receiving a subsequence, the subsequence comprising the start symbol 138 and the commit symbol 148 of the announcement sequence 134. In an example, after the module 100 has received the subsequence comprising the start symbol 138 and the commit symbol 148 via the PCS interface 114, the module 100 may be triggered to detect that the further bits belong to the winner symbol 150.

In an example, the module 100 may be configured, in response to receiving the announcement sequence 134 via the PCS interface 114, to determine the winner identifier and/or the Ethernet node 102, 103, 104 that is ready to send the highest priority Ethernet frame 154 based on the winner node symbol 150. In an example, the module 100 of the first follower Ethernet node 103 may determine the winner identifier of the first follower Ethernet node 103 and/or the first follower Ethernet node 103 in response to receiving the announcement sequence 134 and based on the associated winner node symbol 150. The module 100 of the first follower Ethernet node 103 may determine that the first follower Ethernet node 103 should send the Ethernet frame 154 having the winning priority. The second follower Ethernet node 104 module 100 may also determine the winner identifier of the first follower Ethernet node 103 and/or the first follower Ethernet node 103 in response to receiving the announcement sequence 134 and based on the associated winner node symbol 150. As an effect, the module 100 of the second follower Ethernet node 104 may determine that the second follower Ethernet node 104 should not send an Ethernet frame 154. As a further effect, the second follower Ethernet node 104 will not perform a sending of an Ethernet frame 154. Instead, the second follower Ethernet node 104 may wait for the next AT cycle 120. Similarly, the coordinator Ethernet node 102 module 100 may also determine the winner identifier of the first follower Ethernet node 103 and/or the first follower Ethernet node 103 in response to receiving the announcement sequence 134 and based on the associated winner node symbol 150. As an effect, the module 100 of the coordinator Ethernet node 102 may determine that the coordinator Ethernet node 102 should not send an Ethernet frame 154. As a further effect, the coordinator Ethernet node 102 will not perform a sending of an Ethernet frame 154. Instead, the coordinator Ethernet node 102 may wait for the next AT cycle 120.

The MAC unit 168 of each Ethernet node 102, 103, 104 may be configured to transmit an Ethernet frame 154 to the module 100 of the respective Ethernet node 102, 103, 104 via the MAC interface 112. The module 100 of each Ethernet node 102, 103, 104 may be configured to receive the Ethernet frame 154 via the MAC interface 112. The module 100 of each Ethernet node 102, 103, 104 may control the MAC unit 168 of the respective Ethernet node 102, 103, 104 via the MAC interface 112 such that the MAC unit 168 transmits the Ethernet frame 154 to the module 100, in particular to the associated MAC interface 112, via the MAC interface 112.

Each module 100 may be configured to determine whether the winner identifier represented by the winner node symbol 150 or the winning message indicates a predefined Ethernet node 102, 103, 104. The module 100 of each Ethernet node 102, 103, 104 may be configured to determine whether the winner identifier indicates the Ethernet node 102, 103, 104, particularly the Ethernet node 102, 103, 104 which includes the module 100.

Each module 100 may be configured, in response to positively determining that the winner identifier indicates the associated Ethernet node 102, 103, 104 including the module 100, to control, in particular to initiate, a transmission of the Ethernet frame 154 via the MAC interface 112 and/or to receive the Ethernet frame 154.

Each module 100 may be configured to generate a data sequence 136 based on the Ethernet frame 154 received via the MAC interface 112 in response to a positive determination that the winner identifier indicates the associated Ethernet node 102, 103, 104, particularly the Ethernet node 102, 103, 104 including the module 100. The module 100 may be configured to generate the data sequence 136 such that the data sequence includes the Ethernet frame 154. The Ethernet frame 154 has the highest priority because the module 100 receives the Ethernet frame 154 only in the case where the winner identifier indicates the associated Ethernet node 102, 103, 104. In an example, the module may be configured to generate the data sequence 136 such that the data sequence 136 includes a sequence of a commit symbol 152 and the Ethernet frame 154 received via the MAC interface 112. The commit symbol 152 may be a predefined symbol. In an example, the commit symbol 152 of the data sequence 136 may be identical to the commit symbol 142 (of any priority sequence 126, 128, 130) and/or identical to the commit symbol 148 of the announcement sequence 134.

In an example, the module 100 may be configured to transmit the data sequence 136 via the PCS interface 114 following its generation. In an example, an Ethernet node 102, 103, 104 may include the module 100 such that the data sequence 136 is transmitted via the PCS interface 114 to the PCS unit 172 of the respective Ethernet node 102, 103, 104 and/or to the PHY unit 197 of the respective Ethernet node 102, 103, 104. The PHY unit 197 may be configured to generate a signal representing the data sequence 136 at the media-dependent interface 194 of the respective Ethernet node 102, 103, 104. The signal may be transmitted to the shared media 198 via the connection 196 so that the signal is transmitted to all other Ethernet nodes 102, 103, 104. The (further) Ethernet nodes 102, 103, 104 may receive the signal via the respective associated media-dependent interface 197 of the associated PHY unit 197, wherein the PHY unit 197 is configured in an example to transmit the data sequence 136 represented by the signal to the PCS interface 114 of the module 100 of the respective Ethernet node 102, 103, 104. The module 100 may be configured to receive the data sequence 136 via the PCS interface 114. In an example, the module 100 may be configured to detect the start of the data sequence 136 by the associated commit symbol 152. The module 100 may be configured to detect the commit symbol 152. The module 100 may be configured to detect the subsequent Ethernet frame 154 in response to detecting the commit symbol 152. The module 100 may further be configured to transmit the Ethernet frame 154 of the data sequence 136 via the associated MAC interface 112, in particular to the MAC unit 168 of the respective Internet node 102, 103, 104. As an effect, it can be achieved that the Ethernet frame 154, which has the highest priority, can be transmitted first among the group of ethernet frames 154.

In an example, the module 100 of the first follower Ethernet node 103 may be configured, in response to a positive determination that the winner identifier represented by the winner node symbol 150 indicates the first follower Ethernet node 103, to initiate a transmission of the Ethernet frame 154 from the MAC unit 168 of the first follower Ethernet node 103 to the MAC interface 112 of the module 100 and subsequently generate the data sequence 136 based on the received Ethernet frame 154. In an example, the module 100 of the first follower Ethernet node 103 may be configured to generate the data sequence 136 such that the data sequence 136 includes a sequence of the predefined commit symbol 152 and the received Ethernet frame 154. The module 100 of the first follower Ethernet node 103 may then transmit the data sequence 136 to the PHY unit 197 of the first follower Ethernet node 103 via the PCS interface 154. The PHY unit 197 may generate a signal on the shared media 198 representing the data sequence 136 via the associated media-dependent interface 197. The PHY unit 197 of the coordinator Ethernet node 102 and the PHY unit 197 of the second follower Ethernet node 104 may receive said signal and each transmit the data sequence represented by the signal to the module 100, in particular the associated PCS interface 114, of the respective Ethernet node 102, 104. The module 100 of the coordinator Ethernet node 102 can transmit the Ethernet frame 154 of the data sequence 136 to the MAC unit 168 of the coordinator Ethernet node 102 via the MAC interface 112. The module 100 of the second follower Ethernet node 104 can transmit the Ethernet frame 154 of the data sequence 136 to the MAC unit 168 of the second follower Ethernet node 104 via the MAC interface 112.

It was previously explained that the sequences 122, 126, 128, 130, 134, 136 may include symbols 138, 140, 142, 144, 145, 146, 148, 150, 152. Each symbol 138, 140, 142, 144, 145, 146, 148, 150, 152 may include the same number of bits. In an example, each symbol 138, 140, 142, 144, 145, 146, 148, 150, 152 includes exactly four bits, exactly five bits or exactly six bits.

| 6B Symbol | | | 5B Symbol | Label |
|---|---|---|---|---|
| TX_EN / RX_EN | TX_ER / RX_ER | TXD<3:0> / RXD<3:0> | | |
| 0 | 1 | 0010 | 01000 | Start Symbol 138 |
| 0 | 1 | 0100 | 01101 | Announcement Symbol 140 |
| 0 | 1 | 0011 | 11000 | Commit Symbol 144 |
| 0 | 1 | 0011 | 11000 | Commit Symbol 148 |
| 0 | 1 | 0011 | 11000 | Commit Symbol 152 |

Examples of the symbols are given in the following spreadsheet. The symbols given as examples can also be represented by other bits.

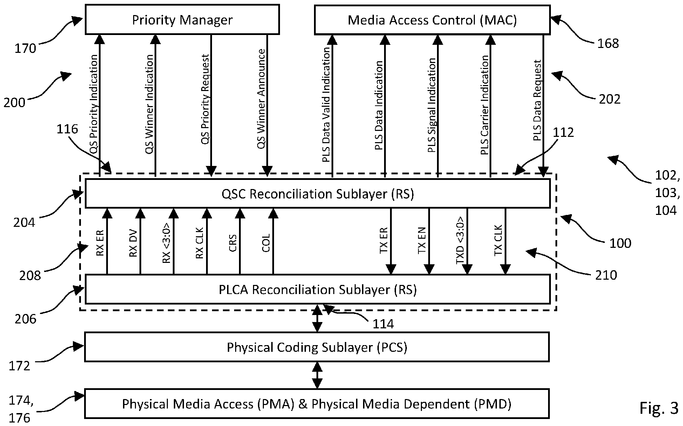

Figure 3 schematically illustrates an example of the module 100. The module 100 may include a QSC unit 204, in particular a QSC reconciliation sublayer unit 204. In addition, the module 100 may include a PLCA unit 206, in particular a PLCA reconciliation sublayer unit 206. Between the QSC unit 204 and the PLCA unit 206, an exchange of symbols may be performed by the communication paths 208, 210 schematically shown in Figure 3. For the communication paths 208, 210, the symbols 138, 140, 144, 148, 152 shown in the above figure may be designed as 6B symbols.

In an example, the PM interface 116 of the module 100 may be formed by the QSC unit 204. The PM interface 116 may be coupled to the PM unit 170 via the connection 200. In an example, the MAC interface 112 of the module 100 may be formed by the QSC unit 204. The MAC interface 112 may be coupled to the MAC unit 168 via the connection 202. In an example, the PCS interface 114 of the module 100 may be formed by the PLCA unit 206.

Figure 4 schematically illustrates an example of an Ethernet node 102, 103, 104. The Ethernet node 102, 103, 104 may include a processing unit 212 and a circuit unit 214. In an example, the PHY unit 197, particularly including PCS unit 172, the PMA unit 174, the PMD unit 176, and the media dependent interface 194, may be formed by the circuit unit 214. In an example, the PLCA unit 206 of the module 100 may be formed by the circuit unit 214. The QSC unit 204 of the module 100 may be formed by the processing unit 212. As an effect, in an example, the module 100 may span both the processing unit 212 and the circuit unit 214. The communication paths 208, 210 may be media independent communication paths 208, 110.

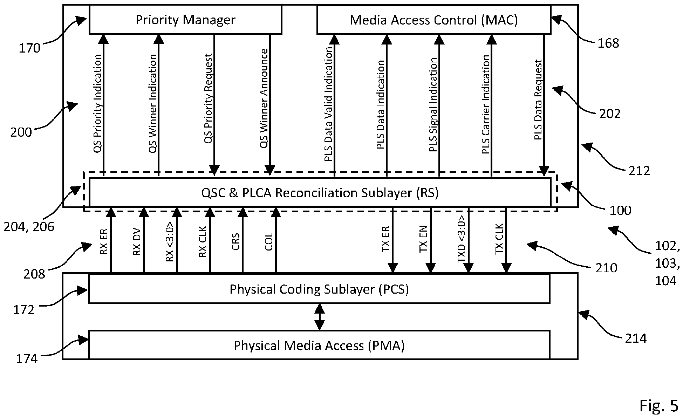

Figure 5 schematically illustrates another example of an Ethernet node 102, 103, 104. In an example shown in Figure 5, the module 100 may be entirely formed by the processing unit 212 of the Ethernet node 102, 103, 104. The circuit unit 214 may form the PHY unit 197, in particular the PCS unit 172, the PMA unit 174, the PMD unit 176 and the media-dependent interface 194.

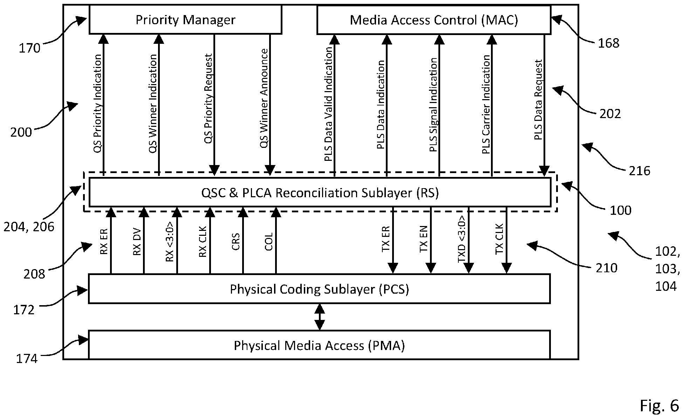

Figure 6 schematically illustrates another example of an Ethernet node 102, 103, 104. In an example shown in Figure 6, a distributed arrangement of the module 100 may be provided within the Ethernet node 102, 103, 104 without a structural subdivision between the processing unit 212 and the circuit arrangement 214.

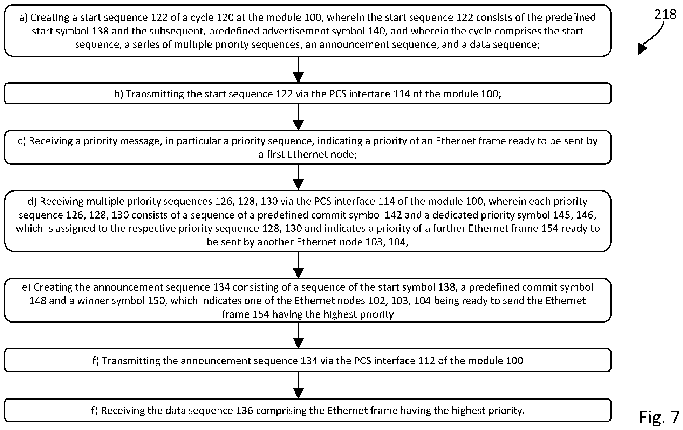

Figure 7 schematically illustrates an example of a method 218. The method 218 relates to the module 100.

The method 218 may include the following steps:
a) Creating a start sequence 122 of a cycle 120 at the module 100, wherein the start sequence 122 consists of the predefined start symbol 138 and the subsequent, predefined advertisement symbol 140, and wherein the cycle comprises the start sequence, a series of multiple priority sequences, an announcement sequence, and a data sequence;
b) Transmitting the start sequence 122 via the PCS interface 114 of the module 100;
c) Receiving a priority message, in particular a priority sequence, indicating a priority of an Ethernet frame ready to be sent by a first Ethernet node;
d) Receiving multiple priority sequences 126, 128, 130 via the PCS interface 114 of the module 100, wherein each priority sequence 126, 128, 130 consists of a sequence of a predefined commit symbol 142 and a dedicated priority symbol 145, 146, which is assigned to the respective priority sequence 128, 130 and indicates a priority of a further Ethernet frame 154 ready to be sent by another Ethernet node 103, 104,
e) Creating the announcement sequence 134 consisting of a sequence of the start symbol 138, a predefined commit symbol 148 and a winner symbol 150, which indicates one of the Ethernet nodes 102, 103, 104 being ready to send the Ethernet frame 154 having the highest priority,
f) Transmitting the announcement sequence 134 via the PCS interface 112 of the module 100,
g) Receiving the data sequence 136 comprising the Ethernet frame having the highest priority.

For the method, reference may be made to the explanations, advantageous features, technical advantages and effects in an analogous manner as previously explained in connection with Figures 1-6 and/or for the module 100, the network nodes 102, 103, 104, or the communication system 178.

Although the described exemplary embodiments disclosed herein focus on modules, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. Module for a first Ethernet node of a group of Ethernet nodes, the module comprising:
a media access control, MAC, interface,
a physical coding sublayer, PCS, interface, and
a priority manager, PM, interface,
wherein the module is configured to receive and/or transmit sequences of a cycle over the interfaces,
wherein the cycle comprises a start sequence, a series of multiple priority sequences, an announcement sequence, and a data sequence,
wherein the start sequence consists of a sequence of a predefined start symbol and a predefined advertisement symbol,
wherein each priority sequence consists of a sequence of a predefined commit symbol and a dedicated priority symbol, which is assigned to the respective priority sequence and indicates a priority of an Ethernet frame ready to be sent by one of the group of Ethernet nodes,
wherein the announcement sequence consists of a sequence of the start symbol, a predefined commit symbol and a winner node symbol indicating one of the Ethernet nodes being ready to send the Ethernet frame having the highest priority, and
wherein the data sequence comprises the Ethernet frame having the highest priority.

2. The module according to the preceding claim,
wherein the module is configured to create the start sequence;
wherein the module is configured to receive first priority message, in particular a first priority symbol, via the PM interface, wherein the first priority message, in particular the first priority symbol, indicating a first priority of an Ethernet frame ready to be sent by the first Ethernet node; wherein the module is configured to create a first priority sequence and to transmit the first priority sequence via the PCS interface, wherein the first priority sequence including the first priority symbol;
wherein the module is configured to receive the winner node symbol via the PM interface, create the announcement sequence and transmit the announcement sequence via the PCS interface.

3. The module according to claim 2,
wherein the module is configured to receive a second priority sequence comprising a second priority symbol via the PCS interface, wherein the second priority symbol indicating a second priority of an Ethernet frame ready to be sent by a second Ethernet node of the group of Ethernet nodes; and
wherein the module is configured to transmit the second priority symbol or a priority message, which represents the second priority, via the PM interface.

4. The module according any of the preceding claims 2 or 3,
wherein the module is configured based on the received winner node symbol to
either receive the Ethernet frame via the MAC interface, create the data sequence and transmit the data sequence via the PCS interface,
or receive the data sequence via the PCS interface and to transmit the Ethernet frame of the received data sequence via the MAC interface.

5. The module according to claim 1,
wherein the module is configured to receive the start sequence via the PCS interface,
wherein the module is configured to receive a second priority message, in particular a second priority symbol, via the PM interface, wherein the second priority message, in particular the second priority symbol, indicating a second priority of an Ethernet frame ready to be sent by a second Ethernet node of the group of Ethernet nodes,
wherein the module is configured to create a second priority sequence including the second priority symbol and to transmit the second priority sequence via the PCS interface,
wherein the module is configured to receive the ethernet frame of the second Ethernet node via the MAC interface,
wherein the module is configured to receive the announcement sequence via the PCS interface,
wherein the module is configured, if the winner node symbol indicating the second Ethernet node, to create the data sequence such that the data sequence comprises the Ethernet frame of the second Ethernet node and to transmit the created data sequence via the PCS interface.

6. The module according to any of the preceding claims, wherein the cycle comprises the following series of sequences: the start sequence, the series of multiple priority sequences, the announcement sequence, and the data sequence.

7. The module according to any of the preceding claims, wherein the module is configured to detect the start of a cycle by receiving a start sequence.

8. The module according to any of the preceding claims, wherein the module is configured to detect a start of the announcement sequence by receiving a first subsequence of the start symbol and the commit symbol.

9. The module according to any of the preceding claims, wherein the module is configured to detect a start of a priority sequence between the start sequence and the announcement sequence by the associated commit symbol.

10. The module according to the preceding claim, wherein each priority sequence starts with the same commit symbol.

11. The module according to any of the preceding claims, wherein each symbol consists of 4 bits, 5 bits, or 6 bits.

12. An **Ethernet node** comprising:
a media access control, MAC, unit,
a priority manager, PM, unit,
a physical coding sublayer, PCS, unit, and
a module according to the preceding claims,
wherein the MAC interface of the module is coupled to the MAC unit,
wherein the PM interface of the module is coupled to the PM unit, and
wherein the PCS interface of the module is coupled to the PCS unit.

13. The Ethernet node according to the preceding claims, wherein the Ethernet node comprises a physical media attachment, PMA, unit and a physical medium dependent, PMD, unit.

14. A **communication system** comprising:
an Ethernet node referred to as a coordinator Ethernet node according to any of the preceding claims 12 to 13, if also dependent on any of the claims 2 to 4,
a plurality of Ethernet nodes referred to as follower Ethernet nodes, each according to any of the preceding claims 12 to 13, if also dependent on claim 5,
wherein the coordinator Ethernet node and the follower Ethernet nodes are coupled via a shared media,
wherein the PM unit of the coordinator Ethernet node is configured to determine a winner priority among the priorities of the ethernet frames,
wherein the PM unit of the coordinator Ethernet node is configured to generate the winner node symbol or a priority message representing the ethernet node being ready to send the ethernet frame having the priority corresponding to the winner priority,
wherein the PM unit of the coordinator node is configured to transmit the winner node symbol or a priority message via the PM interface to the module of the coordinator node, and
wherein the module of the coordinator Ethernet node is configured to transmit the announcement sequence via the PCS interface of the module of the coordinator Ethernet node.

15. A method for a module for a first Ethernet node of a group of Ethernet nodes, the module comprising a media access control, MAC, interface, a physical coding sublayer, PCS, interface, and a priority manager, PM, interface, wherein the method including the following steps:
a) Creating a start sequence of a cycle at the module, wherein the start sequence consists of the predefined start symbol and the subsequent, predefined advertisement symbol, and wherein the cycle comprises the start sequence, a series of multiple priority sequences, an announcement sequence, and a data sequence;
b) Transmitting the start sequence via the PCS interface of the module 100;
c) Receiving a priority message, in particular a priority sequence, indicating a priority of an Ethernet frame ready to be sent by a first Ethernet node;
d) Receiving multiple priority sequences via the PCS interface of the module, wherein each priority sequence consists of a sequence of a predefined commit symbol and a dedicated priority symbol, which is assigned to the respective priority sequence and indicates a priority of a further Ethernet frame ready to be sent by another Ethernet node;
e) Creating the announcement sequence consisting of a sequence of the start symbol, a predefined commit symbol and a winner symbol, which indicates one of the Ethernet nodes being ready to send the Ethernet frame having the highest priority;
f) Transmitting the announcement sequence via the PCS interface of the module; and
g) Receiving the data sequence comprising the Ethernet frame having the highest priority.
